# EUROPEAN PATENT APPLICATION

(11) **EP 4 653 692 A1**
(43) Date of publication of application: **26.11.2025**
(21) Application number: 24177216.9
(22) Date of filing: 22.05.2024
(51) Int. Cl.: F03D 1/06, B29D 99/00, B29C 70/54, B29C 70/30

(54) **TOOL FOR MANUFACTURING A WIND TURBINE BLADE PART**

(71) Applicant: LM Wind Power A/S, 6000 Kolding (DK)
(72) Inventor: KUMAREPIP, Pavan, 560066 BENGALURU (IN); SHILLIG, Scott Iverson, GREENVILLE, 29615 (US); BERKEL, Alex, 1703DH HEERHUGOWAARD (NL); DHAKED, Narendra Singh, 560066 BENGALURU (IN)
(74) Representative: ZBM Patents - Zea, Barlocci & Markvardsen

(57) **Abstract**

There is provided a tool 400 for manufacturing a wind turbine blade part 500. The part 500 comprises a blade shell component 510 and a blade reinforcing structure 520. The tool 400 comprises a flange portion 410 to accommodate a flange of the blade reinforcing structure 520, a mould portion 420 arrangeable on an upper edge 611 of a blade shell mould 600 for the part 500 and a plurality of apertures 421 spaced along the mould portion 420 for accessing the upper edge 611 of the mould 600.

## Description

The present disclosure relates to a tool for manufacturing a wind turbine blade part and a method of manufacturing a wind turbine blade part.

### BACKGROUND

Manufacturing a wind turbine blade part typically involves laying fibres. For example, a wall of a blade shell of a wind turbine blade may be formed by laying a plurality of fibres, which are then held together by a tool during, for instance, curing of the fibres to form the wall after resin infusion.

However, the fibres may sag or slide after having been laid. Sagging or sliding of the fibres may lead to defects, such as wrinkles, in the wind turbine blade part. Removing or correcting for these defects is costly and/or time-consuming. If defects develop, layers may even need to be replaced. Further, even if no defects have developed, the high likelihood of wrinkles developing using current manufacturing methods necessitates labour-intensive inspection of the wind turbine blade part to ensure the absence of defects. Ensuring the absence of defects may be particularly important proximal to joints of the wind turbine blade part, such as commonly found at the periphery of the blade shell.

Hence, there is a need for a tool for manufacturing a wind turbine blade part that reduces of eliminates the risk of defects developing during the manufacture of a wind turbine blade part and a related method.

### SUMMARY

According to a first aspect of the present disclosure, there is provided a tool for manufacturing a wind turbine blade part. The part comprises a blade shell component and a blade reinforcing structure. The tool comprises a flange portion to accommodate a flange of the blade reinforcing structure, a mould portion arrangeable on an upper edge of a blade shell mould for the part and a plurality of apertures spaced along the mould portion for accessing the upper edge of the mould.

The first aspect is advantageous, because the tool holds the wind turbine blade part in place during manufacture.

Further advantageouously, the tool facilitates access to the upper edge of the mould, thereby enabling the fibres or plies that may form the wind turbine blade part to be secured. Securing the fibres at the upper edge of the mould may reduce or eliminate the likelihood of defects developing during manufacture. Consequently, the wind turbine blade part may be manufactured without the need for labour intensive inspection, because the tool facilitates manufacture of a wind turbine blade part with structural integrity.

The presence of the blade reinforcing structure may inhibit the use of application of pressure to the blade shell component as a means to prevent defects from forming, because application of pressure to the blade shell component during, for example, curing may affect the width of the blade shell component. If the width of the blade shell component varies during manufacture, the structural integrity of the interface between the blade shell component and the blade reinforcing structure may be adversely affected. Further, to the extent that fibres of the wind turbine blade part have been secured before curing, the addition of the reinforcing structure precipiates their detachment. Advantageously, the tool precludes such adverse effects by enabling fibres to be secured at the upper edge throughout manufacture.

According to a second aspect of the present disclosure, there is provided a method of manufacturing a wind turbine blade part. The part comprises a blade shell component and a blade reinforcing structure. The method comprises laying a plurality of fibres on a blade shell mould to form the blade shell component, wherein the fibres comprise projections; arranging the blade reinforcing structure on the mould, wherein the blade reinforcing structure comprises a flange; arranging a tool comprising a flange portion, a mould portion and a plurality of apertures spaced along the mould portion, wherein the tool is arranged such that the flange portion accommodates the flange and the mould portion is on an upper edge of the mould; and securing the plurality of fibres through one or more of the plurality of apertures using the projections.

Advantages derived from the second aspect may be the same or similar to those mentioned regarding the first aspect.

### BRIEF DESCRIPTION OF THE DRAWINGS

Non-limiting examples of the present disclosure will be described in the following, with reference to the appended drawings, in which:
Figure 1 shows a perspective view of a wind turbine;
Figure 2 shows a perspective view of a wind turbine blade;
Figure 3 shows a cross-sectional view of a wind turbine blade;
Figure 4 shows a cross-sectional view of a wind turbine trailing edge component;
Figure 5 shows a tool for manufacturing a wind turbine blade part; and
Figure 6 shows a tool for manufacturing a wind turbine blade part, the wind turbine blade part and a blade shell mould;
Figure 7 shows a method of manufacturing a wind turbine blade part; and
Figure 8 shows a layer of fibres having projections.

### DETAILED DESCRIPTION OF EXAMPLES

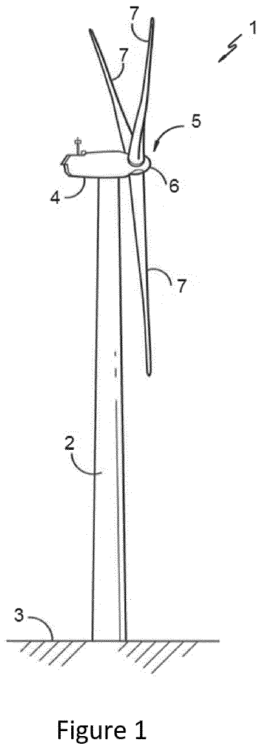

Figure 1 shows a perspective view of an example of a wind turbine 1. As shown, the wind turbine 1 includes a tower 2 extending from a support surface 3, a nacelle 4 mounted on the tower 2 and a rotor 5 coupled to the nacelle 4. The rotor 5 includes a rotor hub 6 and at least one wind turbine blade 7 coupled to and extending outwardly from the rotor hub 6. In the illustrated example, the rotor 5 includes three wind turbine blades 7. However, the rotor 5 may include more or less than three wind turbine blades 7. Each wind turbine blade 7 may be spaced from the rotor hub 6 to facilitate rotating the rotor 5 to enable kinetic energy to be transferred from the wind into usable mechanical energy and, subsequently, electrical energy. For instance, the rotor hub 6 may be rotatably coupled to an electric generator positioned within the nacelle 4 or forming part of the nacelle 4 to permit electrical energy to be produced.

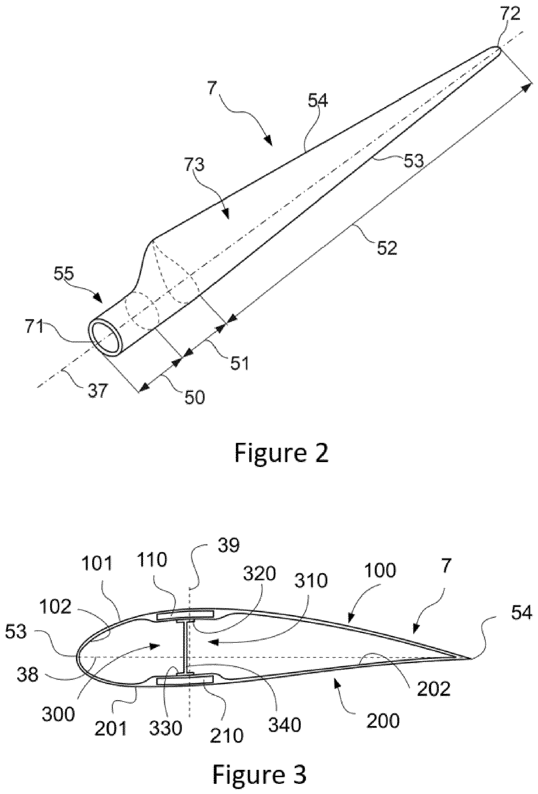

Figure 2 shows an example of a wind turbine blade 7. The wind turbine blade 7 extends in a longitudinal direction or lengthwise direction 37 from a blade root end 71 to a blade tip end 72. The wind turbine blade 7 comprises a blade root region or portion 50 closest to the rotor hub 6, a profiled or an airfoil portion 52 furthest away from the rotor hub 6 and a transition portion 51 between the blade root portion 50 and the airfoil portion 52. The wind turbine blade 7 comprises a leading edge 53 facing the direction of rotation of the wind turbine blade 7 when mounted on the rotor hub 6 and a trailing edge 54 facing the opposite direction of the leading edge 53. The trailing edge 54 may comprise a flatback segment. Flatback profiles result in a blunt trailing edge 54 (e.g., towards the transition portion 51) and have been shown to provide higher lift and reduced sensitivity to soiling at significantly higher drag values.

The airfoil portion 52 has a shape designed to generate lift, whereas the blade root portion 50 has a circular or elliptical cross-section for structural considerations and easy mounting of the blade to the rotor hub 6. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52. The wind turbine blade 7 may be connected to the rotor hub 6 through a blade root attachment portion 55.

The wind turbine blade 7 comprises a blade shell 73. The blade shell 73 comprises an outer side or surface that defines the external shape of the wind turbine blade 7 (e.g., the outer shape at the blade root portion 50 and the outer shape at the airfoil portion 52). The blade shell 73 also comprises an inner side or surface that defines the internal volume of the wind turbine blade 7 and faces a load-carrying structure (not shown). The blade shell 73 may be made of fibre-reinforced polymer or plastics (e.g., glass fibre and/or carbon fibre).

The blade shell 73 may be formed by a plurality of blade shell parts. The plurality of blade shell parts may be joined together to form the blade shell 73. The blade shell parts may be formed and then joined according to any of the examples herein disclosed. For example, resin infusion technology, such as RTM (resin transfer moulding) or VARTM (vacuum assisted resin transfer moulding), or prepreg technology may be used for manufacturing the blade shell parts.

In some examples, the blade shell 73 comprises a lower side blade shell part and an upper blade shell part. The lower side blade shell may be a pressure side blade shell part. The upper blade shell part may be a suction side blade shell part. The lower side blade shell part may be joined to the upper side blade shell part along joining lines along the leading edge 53 and the trailing edge 54.

Each of these blade shell parts may be manufactured in a mould and then joined together to define the entire blade shell of the wind turbine blade 7. A shear web structure is arranged between the lower side blade shell part and the upper side blade shell part.

Figure 3 shows a cross-sectional view of a wind turbine blade 7 according to one example of the present disclosure. A suction side blade shell part or upper blade shell part 100 and a pressure side blade shell part or lower blade shell part 200 extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line 38. The upper blade shell part 100 and the lower blade shell part 200 are joined (e.g., bonded) together along the leading edge 53 and the trailing edge 54.

The upper blade shell part 100 comprises an upper outer layer 101 and an upper inner layer 102. The upper outer layer 101 defines an outer shape of the upper blade shell part 100 and the upper inner layer 102 defines an inner shape of the upper blade shell part 100. The upper outer layer 101 and the upper inner layer 102 may comprise glass fibre laminates. For example, one or more glass fibre laminates may be arranged to form the upper outer layer 101 and/or the upper inner layer 102. The fibres (e.g., glass fibres) may be oriented bidirectionally to enhance the torsional stiffness of the wind turbine blade 7. In other examples, the fibres may be arranged unidirectionally. In further examples, the upper layers 101 and/or 102 comprise laminates with unidirectional fibres and laminates with bidirectional fibres.

The upper blade shell part 100 of this example comprises an upper spar cap structure 110 embedded between the upper outer layer 101 and the upper inner layer 102. The upper spar cap structure 110 is thus arranged between the upper outer layer 101 and the upper inner layer 102. The upper spar cap structure 110 structurally reinforces the upper blade shell part 100.

A core material may be arranged between the upper outer layer 101 and the upper inner layer 102 in some parts of the upper blade shell part 100. For example, a core material may extend a portion between the upper spar cap structure 110 and the leading edge 53. Additionally, or alternatively, a core material may extend a portion between the upper spar cap structure 110 and the trailing edge 54. The core material generally increases the thickness of the blade shell part so as to improve the stiffness without an excessive weight increase. The core material may be made from a lightweight material such as wood (e.g., balsa wood) or foam.

The lower blade shell part 200 may be manufactured like the upper blade shell part 100. As described with respect to the upper blade shell part 100, the lower blade shell part 200 comprises a lower outer layer 201 and a lower inner layer 202. The lower outer layer 201 and/or the lower inner layer 202 may comprise bidirectional glass fibres. A lower spar cap structure 210 is embedded between the lower outer layer 201 and the lower inner layer 202.

The upper spar cap structure 110 and the lower spar cap structure 210 of this example cross the flapwise direction 39. The spar cap structures 110 and 210 face each other. The spar cap structures 110 and 210 may extend a length along the spanwise direction 37 of the wind turbine blade 7. The length of the spar cap structures 110, 210 may be greater than 90% of the entire length of the wind turbine blade 7.

The wind turbine blade 7 comprises a shear web structure 300 arranged between the upper blade shell part 100 and the lower blade shell part 200. The shear web structure 300 provides stiffness to the wind turbine blade 7. The shear web structure 300 comprises a first shear web beam 310 arranged between the upper spar cap structure 110 and the lower spar cap structure 210. In further examples, the shear web structure comprises a first shear web beam and a second shear web beam.

The first shear web beam 310 of this example extends a length along the spanwise direction 37. The shear web beam 310 may substantially extend between the root portion and the tip portion. The length of the first shear web beam 310 may correspond to the length of the spar cap structures 110, 210.

The first shear web beam 310 comprises a web 340 extending between an upper flange 320 and a lower flange 330. The upper flange 320 of the first shear web beam 310 is joined to the upper blade shell part 100. The upper flange 320 is joined (e.g., bonded) to the upper inner layer 102 at the region of the upper spar cap structure 110. Similarly, the lower flange 330 is joined to the lower inner layer 202 at the region of the lower spar cap structure 210. In this example, the first shear web beam 310 and the spar cap structures 110, 210 form the load-carrying structure of the wind turbine blade 7 that serves to withstand loads applied to the wind turbine blade 7.

In this example, the first shear web beam 310 comprises a single web. However, in other examples, the first shear web beam 310 may comprise two webs extending between the flanges 320 and 330. This configuration may be generally known as a spar box configuration.

An adjoining or connecting layer may be arranged between the flanges 320 and 330 and the corresponding inner layer 102 and 202. The adjoining or connective layers join the flanges 320 and 330 to the blade shell parts 100 and 200. The adjoining or connective layer may comprise an adhesive layer. The first shear web beam 310 may thus be bonded to the upper blade shell part 100 and to the lower blade shell part 200. The spar cap structures 110, 210 are arranged between the corresponding flanges 320, 330 and the outer layer 101, 201.

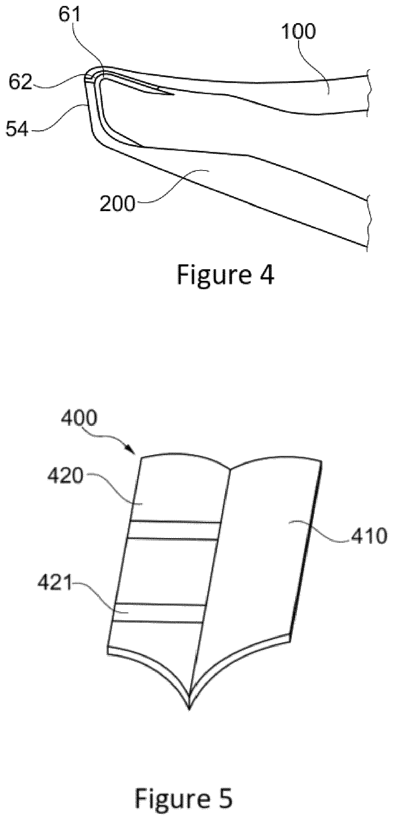

As shown in Figure 4, the upper blade shell part 100 and the lower blade shell part may be connected by a reinforcing structure 61 localised at the joint between the blade shell parts 100, 200 at the trailing edge 54. In the example of Figure 4, the reinforcing structure 61 comprises a flange. The flange may be a bracket (e.g., substantially L-shaped or C-shaped) to facilitate securement to each of the blade shell parts 100, 200 by spanning the joint. In some examples, a corresponding reinforcing structure 61 may be located at the leading edge 53. The flange and/or the blade shell parts may be secured or affixed by an adhesive material 62 (e.g., a glue).

The presence of the blade reinforcing structure 61 may inhibit the use of application of pressure to the blade shell parts 100, 200, for example, as a means to prevent defects from forming, because the application of pressure to one of the blade shell parts 100, 200 during, for example, curing of the blade shell part 100, 200 may affect the width (e.g., of a wall) of the blade shell part 100, 200. If the width of the blade shell part 100, 200 varies during manufacture, the structural integrity of the interface between the blade shell part 100, 200 and the blade reinforcing structure 61 may be adversely affected. Further, to the extent that fibres of the wind turbine blade part 500 have been secured before curing to limit formation of defects, the addition of the reinforcing structure 61 precipiates their detachment. Advantageously, the tool and method described herein preclude such adverse effects on the structural integrity of the interface.

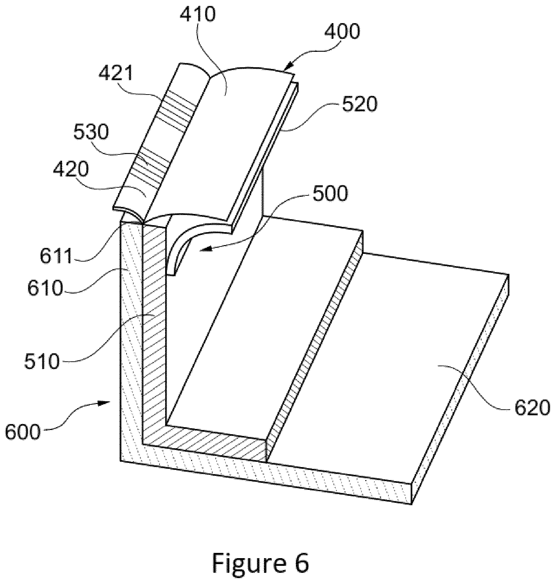

Figure 5 shows a tool 400 (sometimes termed a template) for manufacturing a wind turbine blade part, such as the blade shell parts described above in relation to Figures 2 and 3. Figure 6 shows the tool 400, a wind turbine blade part 500 and a blade shell mould 600.

As shown in Figure 5, the tool comprises a flange portion 410 and a mould portion 420. As shown in Figure 6, the wind turbine blade part 500 comprises a blade shell component 510 and a blade reinforcing structure 520 and is manufactured in the mould 600. The mould may comprise a side 610 against which the blade shell component 510 is manufactured and a base 620 on which the side 610 and the blade shell component 510 sit.

The blade shell component 510 may be a wall (e.g., the upper outer layer 101 or the upper inner layer 102 in Figure 3) of a blade shell part. For example, the blade shell component 510 may be a substantially vertical wall (i.e., a wall inclined at an angle between 80 and 90 degrees) relative to the base 620. In one example, the blade shell component 510 is a trailing edge such as described above in relation to Figures 2 and 3. For example, the blade shell component 510 may be a flatback segment.

The blade reinforcing structure 520 is for strengthening a connection or joint between the blade shell component 510 and another blade shell component (e.g., between adjoining walls forming the wind turbine blade part 500). The blade reinforcing structure 520 comprises a flange. In the case of the blade shell component 510 being a trailing edge, the blade reinforcing structure 520 comprises a trailing edge reinforcing structure.

The flange portion 410 of the tool 400 is configured to to accommodate (e.g., hold) the flange. The mould portion 420 of the tool 400 is arrangeable on an upper edge 611 of the blade shell mould 600 (i.e., an upper edge of the side 610 of the blade shell mould 600). In other words, the flange portion 410 and the mould portion 420, respectively, extend over and clasp or hold the flange and the upper edge 611. To this end, the flange portion 410 and the mould portion may have a substantially U-shaped or V-shaped form. The mould portion 420 comprises a plurality of apertures 421 (e.g., openings).

The apertures 421 are spaced along the mould portion 420, thereby extending along the upper edge 611, and enable access to the upper edge 611 of the mould 600. The plurality of apertures 421 may be located along a section of the mould portion 420 corresponding to the location of the blade reinforcing structure 520 when the tool 400 is in use. The width of each aperture may be 300 mm. As shown in Figures 5 and 6, each aperture may be rectangular. However, the plurality of apertures 421 is not restricted to a particular geometry or size.

By enabling access to or at the upper edge 611, advantageously, the apertures facilitate reduction or elimination of defects during manufacture of the wind turbine blade part 500. For example, the tool 400 may comprise a plurality of clamping units to apply pressure at the upper edge 611 through the apertures. In this way, fibres of plies of the wind turbine blade part 500 may be prevented from sagging or sliding throughout manufacture.

The tool 400 may comprise a glass composite material. The tool 400 may comprise epoxy and/or polyester. Advantageously, these materials are durable. For example, is resistant to heat and chemical applications.

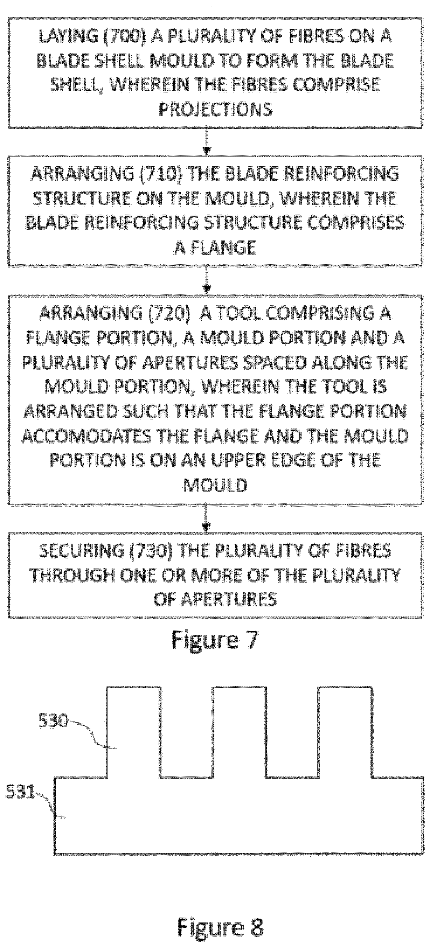

Figure 7 shows a method of manufacturing the wind turbine blade part 500. The method comprises laying 700 a plurality of fibres (e.g., plies) on the blade shell mould 600 (e.g., on the base 610) to form the blade shell component 510. The laid fibres include projections 630 formed therefrom. The method comprises arranging 710 the blade reinforcing structure 520 on the mould 600. The method comprises arranging 720 the tool 400. As alluded to in the description of Figures 5 and 6, the tool 400 is arranged such that the flange portion 410 accommodates the flange and the mould portion 420 is on the upper edge 611. The method comprises securing 730 the plurality of fibres through one or more of the plurality of apertures 421 using the projections 630, such that the method may comprise aligning the plurality of apertures 421 with the projections 630.

In one example, securing 730 the plurality of fibres comprises using a plurality of clamping units to apply pressure to the projections 630 at the upper edge 611. The clamping units may, as said, be part of the tool or may be discrete devices. In another example, securing 730 the plurality of fibres comprises stitching the plurality of fibres together. For instance, in the case that the plurality of fibres are laid one on top of the other, each, for example, fifth fibre layer, may be stitched to the fibre layers below. The fibres that have been stitched together may be tied to a part of the mould 600.

For example, the mould 600 may comprise a hook, and the method may comprise attaching the stitched together fibres to the hook. Securing 730 the plurality of fibres may be performed before arranging 710 the reinforcing structure 61 and arranging 720 the tool 400.

In one example, the projections 530 are formed by serrated edges of the fibres. In another example, the projections are crenellations. An example of the projections 530 as crenellations is shown in Figure 8, where it can be seen how the projections 520 extend from the main body 531 of the fibre layer. Advantageously, crenellations may be a suitable for easy securement. The method may comprise cutting the plurality of fibres to form the projections 530.

The method may comprise infusing and/or curing the plurality of fibres. In one example, the method comprises hermetically sealing (e.g., vacuum bagging) some or all of the wind turbine blade part 500, applying a vacuum and infusing the fibres together with a resin. In hermetically sealing some or all of the wind turbine blade part 500, the method may comprise filling the plurality of apertures 421 with a foam material.

The method may comprise adding a releasing agent to a surface of the tool 400 prior to arranging the tool 400. Advantageously, therefore, the tool 400 may easily be removed from the wind turbine blade part 500 after manufacture (e.g., after curing of the wind turbine blade part 500).

The method may comprise trimming the projections 530 after the wind turbine blade part 500 has been formed (e.g., after curing). In other words, excess material of the projections that is projecting from the plurality of apertures 421 may be cut away, advantageously, to increase the structural integrity of the manufactured wind turbine blade part 500.

For reasons of completeness, various aspects of the present disclosure are set out in the following numbered clauses:
Clause 1. A tool for manufacturing a wind turbine blade part, the part comprising a blade shell component and a blade reinforcing structure, the tool comprising:
   a flange portion to accommodate a flange of the blade reinforcing structure;
   a mould portion arrangeable on an upper edge of a blade shell mould for the part; and
   a plurality of apertures spaced along the mould portion for accessing the upper edge of the mould.
Clause 2. The tool according to clause 1, further comprising:
   a plurality of clamping units to apply pressure at the upper edge of the mould through the apertures.
Clause 3. The tool according to clause 1 or 2, wherein the part comprises a trailing edge.
Clause 4. The tool according to any preceding clause, wherein the part comprises a flatback segment.
Clause 5. The tool according to any preceding clause, wherein the plurality of apertures is located along a section of the mould portion corresponding to the location of the blade reinforcing structure when the tool is in use.
Clause 6. The tool according to any preceding clause, wherein the tool comprises a glass composite material.
Clause 7. The tool according to any preceding clause, wherein the tool comprises epoxy and/or polyester.
Clause 8. A kit for manufacturing a wind turbine blade part comprising:
   the tool according to any preceding clause; and
   a blade shell mould for the part.
Clause 9. A method of manufacturing a wind turbine blade part, the part comprising a blade shell component and a blade reinforcing structure, the method comprising:
   laying a plurality of fibres on a blade shell mould to form the blade shell component, wherein the fibres comprise projections;
   arranging the blade reinforcing structure on the mould, wherein the blade reinforcing structure comprises a flange;
   arranging a tool comprising a flange portion, a mould portion and a plurality of apertures spaced along the mould portion, wherein the tool is arranged such that the flange portion accommodates the flange and the mould portion is on an upper edge of the mould; and
   securing the plurality of fibres through one or more of the plurality of apertures using the projections.
Clause 10. The method according to clause 9, wherein securing the plurality of fibres comprises using a plurality of clamping units to apply pressure to the projections at the upper edge of the mould through the apertures.
Clause 11. The method according to clause 9 or 10, wherein securing the plurality of fibres comprises stitching the plurality of fibres together.
Clause 12. The method according to any of clause 9 to 11, wherein the projections are crenellations.
Clause 13. The method according to any of clause 9 to 12, wherein laying the plurality of fibres on the mould to form the blade shell component comprises forming a substantially vertical wall of the blade shell component.
Clause 14. The method according to clause 13, wherein the substantially vertical wall is inclined at an angle of between 80 and 90 degrees.
Clause 15. The method according to any of clauses 9 to 14, further comprising:
   infusing the plurality of fibres.
Clause 16. The method according to any of clauses 9 to 15, further comprising:
   curing the plurality of fibres.
Clause 17. The method according to any of clauses 9 to 16, further comprising:
   adding a releasing agent to a surface of the tool prior to arranging the tool.
Clause 18. The method according to any of clauses 9 to 17, further comprising:
   cutting the plurality of fibres to form the projections.
Clause 19. The method according to any of clauses 9 to 18, further comprising:
   trimming the projections after the part has been manufactured.
Clause 20. The method according to any of clauses 9 to 19, wherein arranging the tool comprises aligning the plurality of apertures with the projections.

This written description uses examples to disclose the invention, including the preferred embodiments, to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claims and shall not be construed as limiting the scope of the claim.

## Claims

1. A tool (400) for manufacturing a wind turbine blade part (500), the part comprising a blade shell component (510) and a blade reinforcing structure (520), the tool comprising:
a flange portion (410) to accommodate a flange of the blade reinforcing structure;
a mould portion (420) arrangeable on an upper edge (611) of a blade shell mould (600) for the part; and
a plurality of apertures (421) spaced along the mould portion for accessing the upper edge of the mould.

2. The tool according to claim 1, further comprising:
a plurality of clamping units to apply pressure at the upper edge of the mould through the apertures.

3. The tool according to claim 1 or 2, wherein the part comprises a trailing edge.

4. The tool according to any preceding claim, wherein the part comprises a flatback segment.

5. The tool according to any preceding claim, wherein the plurality of apertures is located along a section of the mould portion corresponding to the location of the blade reinforcing structure when the tool is in use.

6. A kit for manufacturing a wind turbine blade part comprising:
the tool according to any preceding claim; and
a blade shell mould for the part.

7. A method of manufacturing a wind turbine blade part (500), the part comprising a blade shell component (510) and a blade reinforcing structure (520), the method comprising:
laying (700) a plurality of fibres on a blade shell mould (600) to form the blade shell component, wherein the fibres comprise projections (530);
arranging (710) the blade reinforcing structure on the mould, wherein the blade reinforcing structure comprises a flange;
arranging (720) a tool comprising a flange portion (410), a mould portion (420) and a plurality of apertures (421) spaced along the mould portion, wherein the tool is arranged such that the flange portion accommodates the flange and the mould portion is on an upper edge (611) of the mould; and
securing (730) the plurality of fibres through one or more of the plurality of apertures using the projections.

8. The method according to claim 7, wherein securing the plurality of fibres comprises using a plurality of clamping units to apply pressure to the projections at the upper edge of the mould through the apertures.

9. The method according to claim 7 or 8, wherein securing the plurality of fibres comprises stitching the plurality of fibres together.

10. The method according to any of claims 7 to 9, wherein the projections are crenellations.

11. The method according to any of claims 7 to 10, wherein laying the plurality of fibres on the mould to form the blade shell component comprises forming a substantially vertical wall of the blade shell component.

12. The method according to any of claims 7 to 11, further comprising:
curing the plurality of fibres.

13. The method according to any of claims 7 to 12, further comprising:
cutting the plurality of fibres to form the projections.

14. The method according to any of claims 7 to 13, further comprising:
trimming the projections after the part has been formed.

15. The method according to any of claims 7 to 14, wherein arranging the tool comprises aligning the plurality of apertures with the projections.
